# EUROPÄISCHE PATENTSCHRIFT

(11) **EP 3 769 054 B1**
(45) Veröffentlichungstag und Bekanntmachung des Hinweises auf die Patenterteilung: **17.05.2023**
(21) Anmeldenummer: 19709880.9
(22) Anmeldetag: 05.03.2019
(51) Int. Cl.: G01F 22/02, G01F 23/14, B65D 88/26, B65D 90/44, B65D 90/48, G01F 1/00

(54) **VERFAHREN ZUM BETRIEB EINES CONTAINERS**
METHOD FOR OPERATING A CONTAINER
PROCÉDÉ DE FONCTIONNEMENT D'UN CONTENEUR

(30) Priorität: 22.03.2018 DE 102018106786
(43) Veröffentlichungstag der Anmeldung: 27.01.2021
(73) Patentinhaber: ZENTIS GmbH & Co. KG, 52070 Aachen (DE)
(72) Erfinder: KÖNIG, Phillip, 52080 Aachen (DE); FREIALDENHOVEN, Tim, 52249 Eschweiler (DE); WASSERKORDT, Ivo Frederik, 3620 Lanaken (BE); STELTER, Peter, 52074 Aachen (DE); JANSEN, Stephan, 52078 Aachen (DE)
(74) Vertreter: Kohlmann, Kai
(86) Internationale Anmeldenummer: PCT/EP2019/055450
(87) Internationale Veröffentlichungsnummer: WO 2019/179763

(56) Entgegenhaltungen:
- CN-U- 205 615 969
- DE-A1-102014 005 399
- US-A- 3 999 668
- US-A1- 2003 080 142
- US-A1- 2004 046 670
- US-A1- 2018 052 030

## Beschreibung

### Einleitung

Die vorliegende Anmeldung betrifft ein Verfahren gemäß dem Oberbegriff von Anspruch 1.

Ein Container, dessen Betrieb Gegenstand des Verfahrens ist, kann insbesondere dazu verwendet werden, ein wässriges, fließfähiges Füllgut vorzuhalten. Hierzu sind beispielsweise sogenannte Fruchtzubereitungen zu nennen, die beispielsweise bei einem Hersteller abgefüllt und sodann an Abnehmer vertrieben werden. Der Container umfasst insbesondere ein Gestell sowie einen Behälter, wobei der Behälter mittels des Gestells in einem Abstand oberhalb eines Untergrundes lagerbar ist. Auf diese Weise ist der Behälter von seiner Unterseite her zugänglich. An besagter Unterseite verfügt der Behälter über mindestens eine Öffnung, mittels derer der Behälter mit Füllgut beladbar ist oder Füllgut aus dem Behälter entnehmbar ist. Um eine Kontamination des Füllguts insbesondere mit Sauerstoff zu vermeiden, verfügt der Behälter zudem über mindestens einen Gasanschluss, mittels dessen eine Schutzgasleitung an den Behälter anschließbar ist. Mittels einer solchen Schutzgasleitung ist es möglich, ein Schutzgas, beispielsweise Kohlendioxid, dem Behälter zuzuleiten. Auf diese Weise ist sichergestellt, dass neben dem Füllgut selbst ein Innenraum des Behälters ausschließlich mit dem Schutzgas gefüllt ist. Hierdurch wird erreicht, dass das in dem Behälter befindliche Füllgut nicht durch den Kontakt mit Umgebungsluft verdirbt.

Der Anschluss der Schutzgasleitung an den Gasanschluss des Behälters erfolgt in aller Regel bevor eine Entnahmevorrichtung an die Öffnung des Behälters angeschlossen wird. Dies hat zur Folge, dass in dem Moment der Entnahme von Füllgut aus dem Behälter in jedem Falle bereits die Schutzgasleitung angeschlossen ist und jederzeit Schutzgas in den Innenraum des Behälters nachströmen kann. Entsprechend ist es üblich, die Schutzgasleitung erst dann von dem Behälter zu entfernen, wenn die Entnahme von Füllgut beendet ist. Insbesondere ist es denkbar, immer zuerst die Entnahmevorrichtung von der Öffnung zu trennen, bevor die Schutzgasleitung von dem Gasanschluss entfernt wird.

Der Container ist vorzugsweise von Edelstahl gebildet, sodass er beliebig häufig verwendet, das heißt insbesondere be- und entladen, werden kann. Sofern das Füllgut eine vergleichsweise hohe Viskosität aufweist kann es sinnvoll sein, das Füllgut zur Entnahme aus dem Behälter mittels einer Pumpe abzupumpen. Um im Zuge der Entnahme des Füllguts aus dem Innenraum des Behälters eine ausreichende Nachströmung von Schutzgas sicherzustellen, ist es zudem vorteilhaft, wenn die Schutzgasleitung an eine Druckquelle angeschlossen ist, die das Schutzgas unter einen bestimmten Druck bereitstellt. Auf diese Weise ist sichergestellt, dass kein Fremdgas, insbesondere keine Umgebungsluft, unbeabsichtigter Weise in den Behälter einströmt.

### Stand der Technik

Container der eingangs beschriebenen Art sind im Stand der Technik bereits bekannt. Hierzu wird beispielhaft auf das Europäische Patent EP 1 544 030 B1 verwiesen, dass sich mit einem Gestell eines solchen Containers befasst.

In der alltäglichen Logistik betreffend derartige Container hat sich herausgestellt, dass es wünschenswert ist, den Füllstand eines solchen Containers nachvollziehen zu können. Hierzu ist es üblich, einen jeweiligen Container im Zuge der Entnahme von Füllgut aus dessen Behälter auf einer Waage zu platzieren, mittels derer eine Veränderung der Masse des Containers feststellbar ist, woraus wiederum ein Rückschluss auf die entnommene Menge des Füllguts gezogen werden kann. Diese Vorgehensweise ist jedoch insoweit von Nachteil, als in jedem Falle eine solche Waage notwendig ist, um den Füllstand des Containers zu überwachen. Hierzu ist anzumerken, dass es in der Praxis sehr üblich ist, dass ein jeweiliger Container etappenweise, womöglich über einen längeren Zeitraum hinweg, geleert wird. Eine Leerung "in einem Zug" ist demgegenüber vergleichsweise unüblich. Mithin besteht grundsätzlich das Interesse, die Füllstände einzelner Container individuell nachzuhalten, sodass jederzeit Klarheit darüber besteht, welche Menge des Füllguts noch verfügbar ist.

Die US 2018/0052030 A1 offenbart eine Fluidstandsmessanordnung umfassend einen Behälter mit einem Einlass und einem an der Unterseite angeordneten Auslass für das Füllgut. Mehrere Strömungsleitungen erstrecken sich von einer Mediumzufuhr zu dem Behälter, wobei jede Strömungsleitung in einer anderen Höhe im Inneren des Behälters mündet. Eine erste Strömungsleitung mündet auf einer untersten Ebene, eine zweite Strömungsleitung mündet ein einer mittleren Ebene und eine dritte Strömungsleitung mündet auf einer höchsten Ebene. Ein Druckaufnehmer ist in jeder der Strömungsleitungen angeordnet, um den Druck innerhalb jeder Strömungsleitung zu messen. Wenn der Fluidstand in dem Behälter die niedrigste Füllstandshöhe überschreitet und dadurch die Mündung der ersten Strömungsleitung abdeckt, erfasst der Druckaufnehmer einen starken Druckanstieg im Vergleich zu dem Ausgangsdruck in der Strömungsleitung. Dieser Druckanstieg zeigt den Flüssigkeitsstand in dem Behälter an. Die Druckaufnehmer in den drei Strömungsleitungen messen solange eine konstanten Druck, bis der Füllstand die Mündung der untersten, mittleren oder höchsten Strömungsleitung überschritten hat. Die erfasste Füllstände werden genutzt, um den Auslass und / oder der Einlass ganz oder teilweise zu öffnen oder zu schließen, um den Flüssigkeitsstand entweder zu erhöhen oder zu verringern.

Die CN 205 615 969 U offenbart einen Tank zur Aufnahme von Methanol mit einem Einlassrohr und einem Auslassrohr. An der Oberseite des Tanks sind ein erstes Gaseinlassrohr, ein zweites Gaseinlassrohr und ein drittes Gaseinlassrohr für die Zufuhr von Stuckstoff angeordnet, wobei das erste Gaseinlassrohr oben, das zweite Gaseinlassrohr unten und das dritte Gaseinlassrohr in der Mitte des Tanks münden. Das erste Lufteinlassrohr ist mit einem Messgerät ausgestattet, das den Druck an der Flüssigkeitsoberfläche messen kann. Das zweite Gaseinlassrohr leitet den Stickstoff zum Boden des Tanks. Ein Messgerät ist an dem zweiten Gaseinlassrohr angeordnet, um die Druckdifferenz zwischen dem Boden der Flüssigkeit und der Flüssigkeitsoberfläche zu messen. Aus der Druckdifferenz wird die Flüssigkeitshöhe errechnet. Eine weiteres Messgerät an dem dritten Gaseinlassrohr misst die Druckdifferenz zwischen dem zweiten Gaseinlassrohr und dem dritten Gaseinlassrohr, um die die Dichte der Flüssigkeit zu ermitteln.

### Aufgabe

Der vorliegenden Anmeldung liegt die Aufgabe zugrunde, ein Verfahren bereitzustellen, mittels dessen ein Füllstand eines jeweiligen Containers im Vergleich zum Stand der Technik einfacher ermittelbar ist.

### Lösung

Die zugrunde liegende Aufgabe wird erfindungsgemäß mittels eines Verfahrens mit den Merkmalen des Anspruchs 1 gelöst. Vorteilhafte Ausgestaltungen ergeben sich aus den Unteransprüchen 2 bis 8.

Das Verfahren sieht vor, dass vor der Entnahme von Füllgut aus dem Behälter eine Schutzgasleitung an den Gasanschluss angeschlossen und mit Druck beaufschlagt wird. Ein entsprechendes Vorgehen ist eingangs bereits dargelegt worden. Weiterhin wird eine Entnahmevorrichtung an die Öffnung des Behälters angeschlossen, sodass mittels der Entnahmevorrichtung Füllgut aus dem Behälter entnommen werden kann. Grundsätzlich sind der Anschluss der Schutzgasleitung sowie der Anschluss der Entnahmevorrichtung an den Container keiner zeitlichen Reihenfolge unterworfen. Entscheidend ist lediglich, dass vor der tatsächlichen Entnahme des Füllguts die Schutzgasleitung an den Behälter angeschlossen und mit Druck beaufschlagt wird, sodass Schutzgas nachgeführt werden kann und somit ein in dem Behälter aufgrund der Entnahme des Füllguts freiwerdendes Volumen ausfüllen kann.

Erfindungsgemäß werden zumindest während eines Zeitraums der Entnahme des Füllguts aus dem Behälter mittels mindestens eines Drucksensors Daten betreffend einen Druck des Schutzgases in dem Mediumkanal erfasst. Der "Mediumkanal" kann grundsätzlich jede Leitung betreffen, durch die hindurch das Schutzgas in den Behälter einströmen kann. Insbesondere kann der Mediumkanal unmittelbar an der Schutzgasleitung oder an bzw. in dem Container selbst ausgebildet sein. Alternativ ist es jedoch ebenso vorstellbar, dass der Mediumkanal an einem Adapterelement ausgebildet ist, dass in Kraft übertragender Weise an den Container angeschlossen wird. Beispielsweise ist es denkbar, ein entsprechendes Adapterelement an den Gasanschluss des Behälters anzuschließen, wobei das Adapterelement mit dem Drucksensor ausgestattet ist. Die Schutzgasleitung kann in einem solchen Fall an das Adapterelement angeschlossen werden, sodass das mittels der Schutzgasleitung bereitgestellte Schutzgas durch das Adapterelement bzw. einen Mediumkanal desselben hindurch zu dem Gasanschluss des Behälters und schließlich in den Innenraum des Behälters einströmen kann.

Für das erfindungsgemäße Verfahren ist es lediglich erforderlich, dass mindestens ein Mediumkanal, durch den das Schutzgas hindurch in den Behälter einströmt, mit einem Drucksensor ausgestattet ist, sodass ein Druck des Schutzgases in dem Mediumkanal zumindest mittelbar mittels des Drucksensors erfassbar ist. Der "Druck" muss dabei nicht notwendigerweise einen Gesamtdruck des Schutzgases bezeichnen. Stattdessen ist es ebenso möglich, dass der erfasste Druck lediglich einen Teildruck des Schutzgases beschreibt, beispielsweise einen dynamischen Druck oder einen statischen Druck des Schutzgases. Der dynamische Druck des Schutzgases ist durch dessen Strömungsgeschwindigkeit innerhalb des Mediumkanals bestimmt.

Mittels der Ermittlung eines Drucks des Schutzgases in dem Mediumkanal ist es erfindungsgemäß möglich, Zeitpunkte festzustellen, zu denen eine Entnahme von Füllgut aus dem Behälter beginnt und endet. Die Differenz aus diesen Zeitpunkten ergibt einen Zeitraum, innerhalb dessen eine Entnahme von Füllgut aus dem Behälter stattgefunden hat. Die Ausprägung dieses Zeitraums lässt wiederum einen Rückschluss darauf zu, wie viel Füllgut aus dem Behälter entnommen wurde. Auf diese Weise ist es möglich, ausgehend von einem vollständig gefüllten Behälter nachzuverfolgen, welchen Füllstands der Behälter nach der Entnahme von Füllgut noch aufweist, wobei der im Stand der Technik bekannte Einsatz einer Waage ausbleiben kann. Wird beispielsweise mittels Auswertung eines Druckverlaufs des Schutzgases festgestellt, dass über einen Zeitraum von 10 Minuten hinweg Füllgut aus dem Behälter entnommen wurde, kann bei bekanntem Massestrom der Entnahme des Füllgutes aus dem Behälter, dessen verbleibender Füllstand in Bezug auf den Ausgangsfüllstand zu Beginn der Entnahme genau ermittelt werden.

Eine Erfassung des statischen Drucks innerhalb des Mediumkanals kann beispielsweise mittels einer Stichleitung erfolgen, die sich schräg, vorzugsweise senkrecht, zu einer Längsachse des Mediumkanals erstreckt und einen Mediumkanal angeschlossen ist, wobei der Drucksensor an einem dem Mediumkanal abgewandten Ende der Stichleitung angeordnet ist. Bei einer solchen Anordnung ist eine Strömung des Schutzgases durch den Mediumkanal senkrecht zu der Stichleitung orientiert, sodass ein mittels des am Ende der Stichleitung angeordneten Drucksensors erfasster Druck frei von einem Anteil des dynamischen Drucks an den Gesamtdruck des Schutzgases ist. Stattdessen wird mittels eines solchen Drucksensors lediglich der statische Druck des Schutzgases erfasst.

Alternativ oder zusätzlich ist es ebenso denkbar, den Mediumkanal mit einem Pitotrohr auszustatten, das einen sich in längsachsparallele Richtung des Mediumkanals erstreckenden Abschnitt aufweist. Mittels eines Öffnungsquerschnitts ist ein solches Pitotrohr dazu geeignet, durch den Mediumkanal strömendes Schutzgas aufzunehmen, wobei mittels eines an einem dem Mediumkanal abgewandten Ende des Pitotrohrs angeordneten Drucksensors ein Gesamtdruck des Schutzgases erfassbar ist, das heißt die Summe eines statischen und eines dynamischen Drucks des Schutzgases. Mittels kombinierter Erfassung des Gesamtdrucks sowie des statischen Drucks kann mittels Subtraktion auf den dynamischen Druck des Schutzgases rückgeschlossen werden. Eine kombinierte Erfassung von Gesamtdruck und statischem Druck ist beispielsweise mittels eines Prandtl-Rohrs möglich, dessen Einsatz hier gleichermaßen vorstellbar ist. Alternative Anordnungen eines Drucksensors an oder in einem Mediumkanal sind selbstverständlich ebenso vorstellbar.

Mittels der Ermittlung eines Drucks des Schutzgases in dem Mediumkanal ist es erfindungsgemäß möglich, Zeitpunkte festzustellen, zu denen eine Entnahme von Füllgut aus dem Behälter beginnt und endet. Die Differenz aus diesen Zeitpunkten ergibt einen Zeitraum, innerhalb dessen eine Entnahme von Füllgut aus dem Behälter stattgefunden hat. Die Ausprägung dieses Zeitraums lässt wiederum einen Rückschluss darauf zu, wie viel Füllgut aus dem Behälter entnommen wurde. Auf diese Weise ist es möglich, ausgehend von einem vollständig gefüllten Behälter nachzuverfolgen, welchen Füllstands der Behälter nach der Entnahme von Füllgut noch aufweist, wobei der im Stand der Technik bekannte Einsatz einer Waage ausbleiben kann. Wird beispielsweise mittels Auswertung eines Druckverlaufs des Schutzgases festgestellt, dass über einen Zeitraum von 10 Minuten hinweg Füllgut aus dem Behälter entnommen wurde, kann bei bekanntem Massestrom der Entnahme des Füllgutes aus dem Behälter, dessen verbleibender Füllstand in Bezug auf den Ausgangsfüllstand zu Beginn der Entnahme genau ermittelt werden.

Das erfindungsgemäße Verfahren hat viele Vorteile. Insbesondere ist es möglich, eine Vielzahl von Containern dezentral und ohne weitere externe Hilfsmittel zu überwachen und den Füllstand jedes einzelnen Containers individuell nachzuhalten. Hierzu ist es lediglich erforderlich, mindestens einen Drucksensor in oder an einem Mediumkanal des Containers anzuordnen und mittels des Drucksensors erfasste Daten zu verarbeiten. Die Ausstattung eines jeweiligen Containers mit einem solchen Drucksensor kann besonders einfach mittels eines an den Gasanschluss einsetzbaren Adapterelements erfolgen, wie nachstehend gesondert dargelegt wird.

In einer Weiterbildung des erfindungsgemäßen Verfahrens kann in Abhängigkeit der Druckverhältnisse zudem eine Aussage darüber getroffen werden, wie groß der Volumenstrom des in den Behälter nachströmenden Schutzgases und demzufolge auch der Massenstrom des aus dem Behälter entnommenen Füllguts sind. Auf diese Weise kann als zusätzlicher Parameter die "Entnahmegeschwindigkeit" betreffend das Füllgut berücksichtigt werden. Der Volumenstrom des nachströmenden Schutzgases ist proportional zu dem Massenstrom des aus dem Behälter entnommenen Füllguts, so dass sich der Füllstand des Behälters quantitativ genau bestimmen lässt. Wird der Massestrom des entnommenen Füllgutes indes nicht ermittelt, kann der Füllstand anhand der ermittelten Entnahmedauer unter Annahme von typische Werten für den Massestrom während der Entnahme für ein spezifisches Füllgut hinlänglich genau abgeschätzt werden. In jedem Fall kann über die Auswertung der Druckkurve zumindest zuverlässig die erstmalige Entnahme von Füllgut aus dem vollständig gefüllten Behälter und die vollständige Entleerung des Behälters festgestellt werden. Eine qualitative Füllstandskontrolle ist daher mit dem Drucksensor in jedem Fall möglich.

In einer vorteilhaften Ausgestaltung des erfindungsgemäßen Verfahrens wird das Schutzgas in dem Mediumkanal beschleunigt, insbesondere mittels einer in dem Mediumkanal angeordneten Engstelle. Eine solche Engstelle ist dadurch definiert, dass ein Querschnitt des Mediumkanals im Bereich der Engstelle kleiner ist als ein Querschnitt des Mediumkanals außerhalb der Engstelle. Die Beschleunigung des Schutzgases im Bereich der Engstelle führt dazu, dass ein dynamischer Druck des Schutzgases lokal ansteigt, während der statische Druck entsprechend abnimmt. Dies betrifft zumindest solche Fälle, in denen ein von einer Druckquelle zur Verfügung gestellter Gesamtdruck des Schutzgases zumindest im Wesentlichen, insbesondere vollständig, konstant ist. Die bereichsweise Beschleunigung des Schutzgases innerhalb des Mediumkanals erleichtert insbesondere eine Feststellung von Änderungen eines Volumenstroms, der durch den Mediumkanal in den Innenraum des Behälters einströmen.

Die Erhebung von Daten betreffend eine derartige Änderung ist insoweit von Vorteil als derartige Daten dazu verwendet werden können, den Massenstrom, mit dem Füllgut aus dem Behälter entnommen wird, indirekt zu bestimmen. Dem liegt die Überlegung zugrunde, dass eine umso schnellere Entnahme von Füllgut aus dem Behälter zu einem schnelleren Nachströmen von Schutzgas durch den Mediumkanal führt. Die Erhebung der Druckverhältnisse in den Mediumkanal, beispielsweise nach dem Venturi-Prinzip oder mittels eines Pitotrohrs, kann demzufolge behilflich sein, eine entsprechende Aussage zu treffen. Der erfasste statische und dynamische Druck erlaubt über das Bernoullische Gesetz die Berechnung der Strömungsgeschwindigkeit des Schutzgases in einem Strömungsquerschnitt. Die Berechnung des Massestroms des einströmenden Schutzgases ergibt sich sodann aus dem Produkt von Dichte des Schutzgases, der berechneten Strömungsgeschwindigkeit und dem Strömungsquerschnitt. Alternativ oder zusätzlich ist es denkbar, einen Massenstrom des durch die Öffnung aus dem Behälter austretenden Füllguts direkt und separat zu ermitteln, wobei beispielsweise die Anordnung eines entsprechenden Strömungssensors an der Öffnung des Behälters möglich ist.

In einer weiterhin vorteilhaften Ausgestaltung des erfindungsgemäßen Verfahrens werden mittels des Drucksensors erfasste Daten mittels eines Datenloggers zumindest zeitweise gespeichert. Insbesondere ist es denkbar, die erfassten Daten zumindest so lange zu speichern, bis der Behälter vollständig entleert ist. Weiterhin kann es von Vorteil sein, wenn die mittels des Drucksensors erfassten Daten mittels einer Auswerteeinheit verarbeitet werden. Letztere kann beispielsweise mittels eines hinterlegten Algorithmus Veränderungen des in dem Mediumkanal vorliegenden Drucks feststellen und darauf basierend Zeitpunkte bestimmen, zu denen die Entnahme von Füllgut aus dem Behälter beginnt und/oder endet.

Um erfasste Daten extern auswerten oder bereits an dem Container mittels einer Auswerteeinheit ausgewerteten Daten evaluieren und einsehen zu können, ist es weiterhin von besonderem Vorteil, wenn entsprechende Daten mittels eines Senders kabellos versendet werden. Ein solcher Sender kann beispielsweise das normale Mobilfunknetz verwenden, um Daten zu übertragen. Auf diese Weise ist es möglich, dass eine befugte Person die entsprechenden Daten abruft und einsieht und darauf basierend individuelle Entscheidungen treffen kann.

Der in dem Verfahren verwendete Container umfasst mindestens eine Sensoreinrichtung, die ein Adapterelement aufweist. Dieses Adapterelement ist dazu geeignet, vorzugsweise lösbar an den Gasanschluss des Behälters angeschlossen zu werden, sodass die Sensoreinrichtung an den Container angeschlossen ist. Das Adapterelement umfasst mindestens einen Gasstutzen und mindestens einen Mediumkanal, wobei der Gasstutzen dazu geeignet ist, eine Schutzgasleitung aufzunehmen, sodass Schutzgas ausgehend von der Schutzgasleitung durch den Gasstutzen sowie durch den Mediumkanal des Adapterelements hindurch zu dem Gasanschluss des Behälters und schließlich in den Innenraum des Behälters leitbar ist. Ferner umfasst die Sensoreinrichtung mindestens einen Drucksensor, der zumindest mittelbar mit dem Mediumkanal zusammenwirkt. Mittels des mindestens einen Drucksensors sind Daten betreffend einen in dem Mediumkanal vorliegenden Druck des Schutzgases erfassbar. Wie vorstehend bereits dargelegt, kann es sich bei diesem Druck sowohl um einen Gesamtdruck des Schutzgases als auch um Teildrücke desselben handeln, beispielsweise einen dynamischen Druck und/oder einen statischen Druck.

Das erfindungsgemäße Verfahren ist mittels des Containers besonders einfach durchführbar. Insbesondere können mittels des mindestens einen Drucksensors besonders einfach Daten betreffend einen Druck innerhalb des Mediumkanals erhoben werden, woraus in der beschriebenen Weise ein Rückschluss auf eine entnommene Menge von Füllgut und mithin auf einen Füllstand eines jeweiligen Containers mit Füllgut gezogen werden kann.

In einer besonders vorteilhaften Ausgestaltung des Containers weist der Mediumkanal des Adapterelements mindestens eine Engstelle auf, an der ein Querschnitt des Mediumkanals gegenüber einem Querschnitt des Mediumkanals außerhalb der Engstelle reduziert ist. Vorteilhafterweise ist die Engstelle derart in den Mediumkanal eingebunden, dass der Querschnitt des Mediumkanals beidseits der Engstelle aufgeweitet ist. Mit anderen Worten ist der Mediumkanal vorteilhafterweise derart ausgestaltet, dass durch den Mediumkanal strömendes Gas im Bereich der Engstelle beschleunigt wird und sodann nach Verlassen der Engstelle aufgrund der insbesondere konischen Aufweitung des Mediumkanals abgebremst wird. Im Zuge der Beschleunigung des Gases wird der dynamische Druck desselben innerhalb des Mediumkanals lokal erhöht und der statische Druck entsprechend reduziert, soweit der Gesamtdruck des Gases, das beispielsweise aus einer unter Druck stehenden Gasflasche bereitgestellt wird, konstant bleibt.

Weiterhin ist es von besonderem Vorteil, wenn die Sensoreinrichtung mindestens eine Stichleitung aufweist, die strömungstechnisch mit den Mediumkanal des Adapterelements zusammenwirkt. Eine Längsachse der Stichleitung ist vorzugsweise senkrecht zu einer Längsachse des Mediumkanals orientiert, sodass die Stichleitung senkrecht auf den Mediumkanal trifft. Besonders zu bevorzugen ist eine Ausführungsform, bei der die Stichleitung im Bereich einer vorstehend genannten Engstelle auf den Mediumkanal trifft. Mittels einer solchen Stichleitung ist es möglich, an deren dem Mediumkanal abgewandten Ende einen Drucksensor anzuordnen, mittels dessen Änderungen des Drucks innerhalb der Stichleitung erfassbar sind. Eine solche Ausgestaltung der Sensoreinrichtung ermöglicht die Messung einer Veränderung des statischen Drucks innerhalb des Mediumkanals, die sich aufgrund einer Strömungsgeschwindigkeit des durch den Mediumkanal strömenden Gases ergibt. Dem liegt die Überlegung zugrunde, dass eine umso größere Strömungsgeschwindigkeit des Gases im Bereich der Engstelle zu einem umso höheren dynamischen Druck und umgekehrt analog hierzu zu einem umso niedrigeren statischen Druck des Gases in dem Mediumkanal führt, soweit ein Gesamtdruck des Gases, der mittels einer Druckquelle zur Verfügung gestellt wird, konstant ist.

Infolge der Veränderung des statischen Drucks in dem Mediumkanal ändert sich auch der Druck in der Stichleitung, die aufgrund ihrer bevorzugt senkrechten Ausrichtung zum Mediumkanal ausschließlich mit dem statischen Druck des Gases beaufschlagt ist, wobei diese Veränderung mittels des Drucksensors ermittelbar ist. Auf diese Weise kann zunächst grundsätzlich festgestellt werden, das Schutzgas durch den Mediumkanal strömt und mithin offenbar eine Entnahme von Füllgut aus dem Behälter des Containers stattfindet. Anderenfalls würde das Schutzgas nicht in den Behälter einströmen, sondern sich womöglich lediglich der statische Druck erhöhen, je nach Druckniveau der Quelle des Schutzgases. Im Ergebnis ermöglicht demzufolge die Kombination aus Engstelle, Stichleitung und Drucksensor eine Überwachung der Strömungsverhältnisse eines Schutzgases durch die Sensoreinrichtung.

Mittels Aufzeichnung und anschließender Auswertung eines Verlaufs von mittels des Drucksensors ermittelter Daten kann schließlich eine Aussage darüber getroffen werden, über welchen Zeitraum hinweg Schutzgas durch die Sensoreinrichtung hindurch in den Innenraum des Behälters eingeströmt ist. Hieraus ist der Rückschluss möglich, dass über denselben Zeitraum hinweg Füllgut aus dem Behälter entnommen wurde. In Kenntnis dieses Zeitraums ist es folglich möglich, eine Aussage über einen verbleibenden Füllstand des Behälters zu machen, nachdem der Zeitraum der Entnahme von Füllgut beendet ist. Wird beispielsweise mittels Auswertung eines Druckverlaufs des Schutzgases festgestellt, dass über einen Zeitraum von 10 Minuten hinweg Füllgut aus dem Behälter entnommen wurde, kann bei bekanntem Massestrom der Entnahme des Füllgutes aus dem Behälter, dessen verbleibender Füllstand in Bezug auf den Ausgangsfüllstand zu Beginn der Entnahme ermittelt werden. Eine Druckverlaufskurve, die mittels des Drucksensors erfasst und anschließend aufgezeichnet wurde, kann insbesondere in Momenten, in denen eine Pumpe zur Entnahme des Füllguts aktiviert und deaktiviert wird, charakteristische Ausschläge aufweisen, mittels deren Interpretation in der oben beschriebenen Weise eine Aussage über eine Entnahmedauer und daraus resultierend eine entnommene Menge des Füllguts möglich ist. Beispielsweise kann die Druckverlaufskurve im Moment der Aktivierung der Pumpe einen schlagartigen Abfall zeigen, was auf eine sich einstellende Strömung des Schutzgases innerhalb des Mediumkanals zurückzuführen ist. Diese setzt ein, da ein freiwerdendes Volumen im Innenraum des Behälters mit Schutzgas "nachgefüllt" wird, das durch den Gasanschluss des Behälters - und somit vorher durch den Mediumkanal der Sensoreinrichtung - in den Innenraum einströmt. Infolge der Strömung des Schutzgases durch den Mediumkanal fällt im Bereich der Engstelle aufgrund des Anstiegs des dynamischen Drucks der statische Druck ab, was mittels des in der an die Engstelle angeschlossenen Stichleitung vorhandenen Drucksensors als Druckabfall registriert wird. Umgekehrt steigt der statische Druck in der Stichleitung bei Beendigung der Entnahme von Füllgut aus dem Behälter wieder an, sodass der Zeitpunkt der Beendigung der Entnahme feststellbar ist.

Eine Überwachung des Füllstands eines Behälters ist grundsätzlich im Zuge der Entnahme des Füllguts von besonderem Interesse, da bei einer Befüllung in aller Regel ohnehin der Behälter vollständig gefüllt wird, sodass anschließend immer ein voller Behälter vorliegt. Bei der Entnahme ist es hingegen sehr üblich, dass das Füllgut etappenweise, womöglich über mehrere Tage verteilt, entnommen wird, sodass eine genaue Verfolgung der Abnahme des Füllstands des Behälters von Interesse ist. Eine Entnahme des Füllguts aus einem jeweiligen Behälter kann je nach Verwendung des Füllguts sehr individuell sein und folgt in der Praxis selten einem immer gleichen Muster.

### Ausführungsbeispiel

Der Container ist nachstehend anhand eines Ausführungsbeispiels, das in den Figuren dargestellt ist, näher erläutert. Es zeigt:
- Fig. 1:: Eine schematische Seitenansicht eines Containers,
- Fig. 2:: Eine perspektivische Ansicht eines Deckels des Containers gemäß Figur 1,
- Fig. 3:: Einen vertikalen Querschnitt durch eine Sensoreinrichtung des Containers gemäß Figur 1,
- Fig. 4:: Ein Detail der Sensoreinrichtung gemäß Figur 3,
- Fig. 5:: Ein Detail einer alternativen Sensoreinrichtung,
- Fig. 6:: Eine perspektivische Ansicht eines Deckels für einen Container gemäß Figur 1, jedoch mit einer alternativen Sensoreinrichtung,
- Fig. 7:: Einen vertikalen Querschnitt durch die Sensoreinrichtung gemäß Figur 6,
- Fig. 8:: Ein Detail der Sensoreinrichtung gemäß Figur 7 und
- Fig. 9:: Eine Druckverlaufskurve während einer Entnahme von Füllgut aus einem Container.

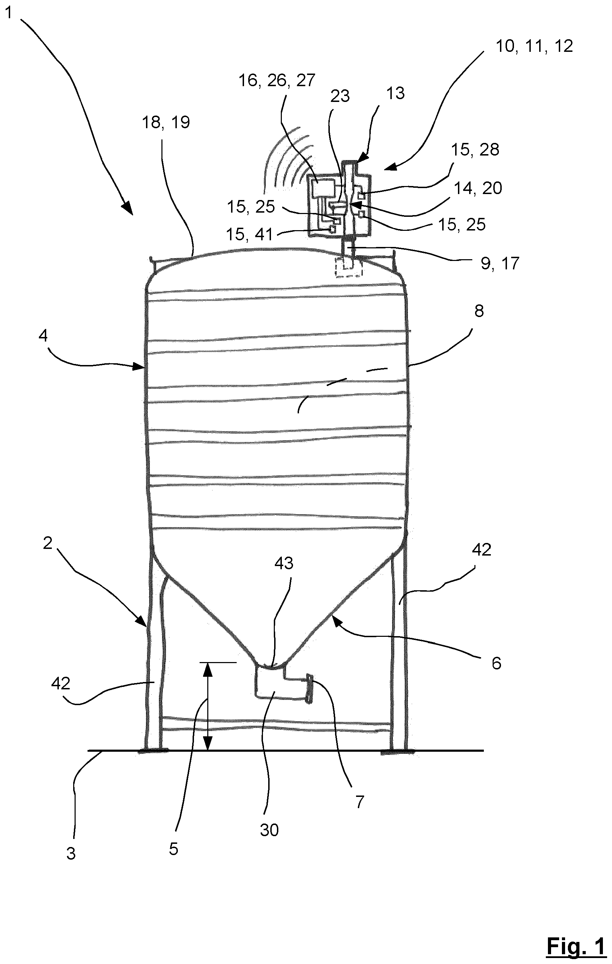

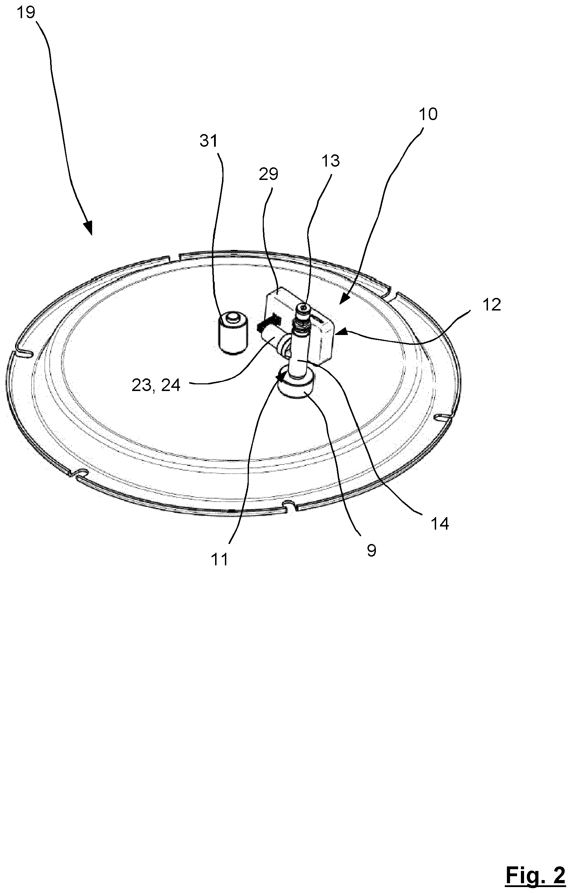

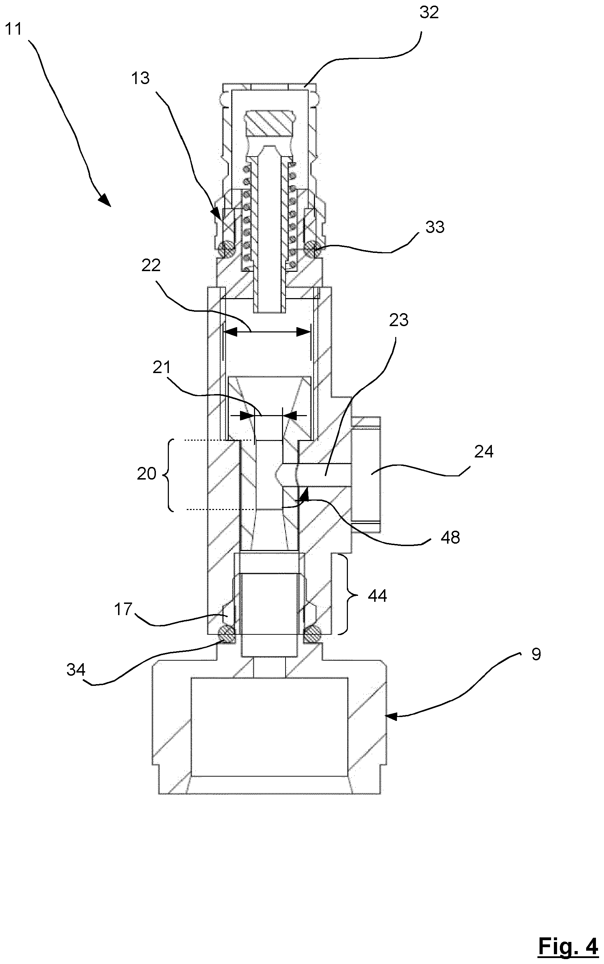

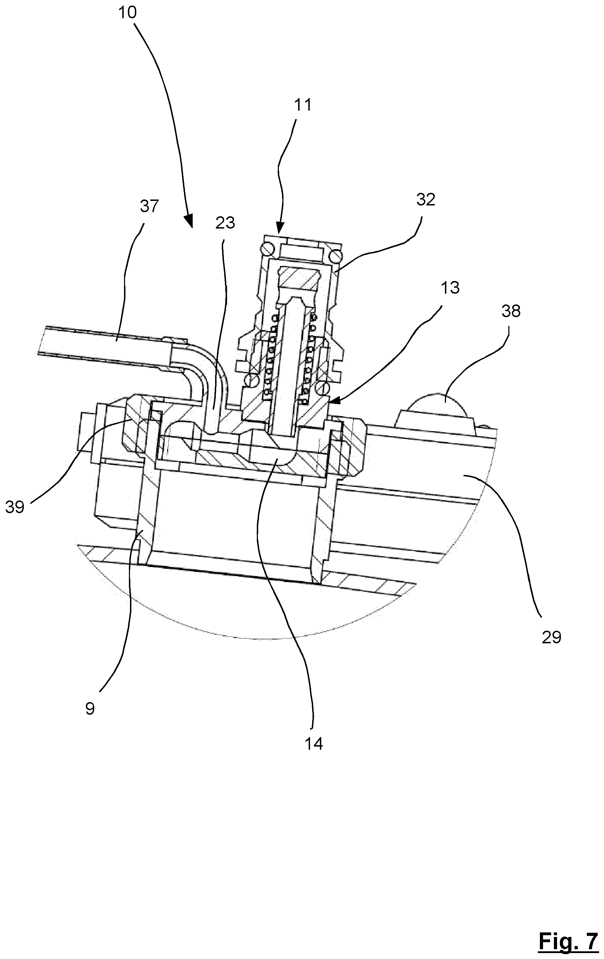

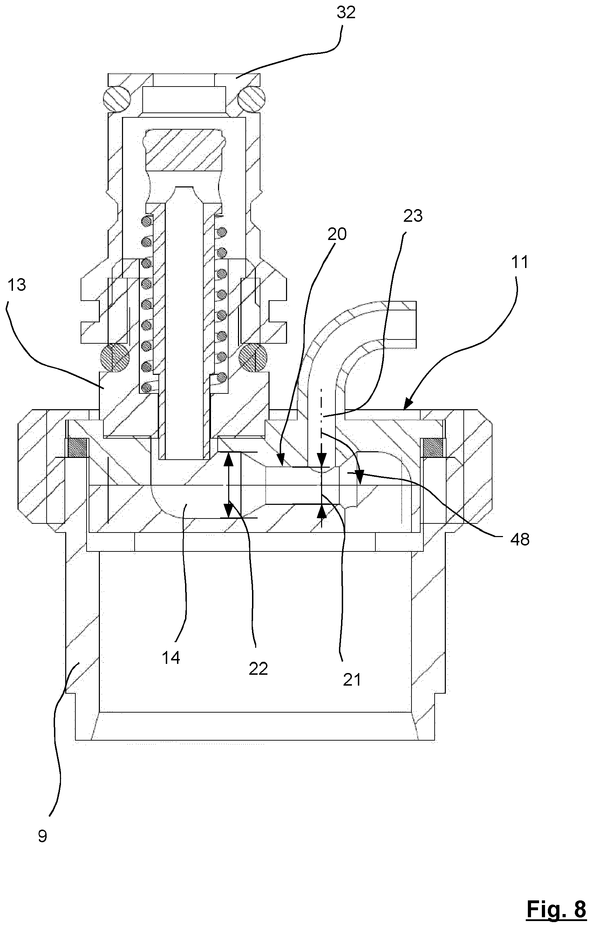

Ein Ausführungsbeispiel, das in den **Figuren 1 bis 9** gezeigt ist, umfasst einen Container **1,** der einen Behälter **4** sowie ein Gestell **2** umfasst. Das Gestell **2** umfasst wiederum eine Mehrzahl von Beinen **42,** mittels derer der Container **1** auf einem Untergrund **3** aufsteht. Der Behälter **4** ist mittels des Gestells **2** derart beabstandet von dem Untergrund **3** gelagert, dass eine Unterseite **6** des Behälters **4** von unten her zugänglich ist. Insbesondere befindet sich eine tiefste Stelle **43** des Behälters **4** in einem Abstand **5** von dem Untergrund **3.** Besagte tiefste Stelle **43** wirkt mit einer Öffnung **7** zusammen, durch die hindurch ein Innenraum **8** des Behälters **4** mit Füllgut beladbar ist bzw. besagtes Füllgut aus dem Innenraum **8** entnehmbar ist. Hierzu wirkt der Behälter **4** mit einem Anschlussrohr **30** zusammen, dass einen 90° Winkel aufweist, sodass ein Querschnitt der Öffnung **7** vertikal orientiert ist. Die Öffnung **7** wirkt hier mit einem Anschlussstutzen zusammen, sodass ein Füllgutschlauch an die Öffnung **7** ankoppelbar ist, mittels dessen Füllgut aus dem Behälter **4** entnehmbar ist oder umgekehrt Füllgut in den Behälter **4** einfüllbar ist.

An einer Oberseite **18** weist der Container **1** einen Deckel **19** auf, an dem ein Gasanschluss **9** und ein Überdruckventil **31** ausgebildet sind. Dieser Gasanschluss **9** dient dazu, mit einer in den Figuren nicht dargestellten Schutzgasleitung zusammenzuwirken. Mittels einer solchen Schutzgasleitung wird die Möglichkeit geschaffen, dem Innenraum **8** des Behälters **4** ein Schutzgas zuzuleiten, beispielsweise Kohlendioxid. Ein solches Schutzgas ist bedeutsam, um ein in dem Behälter **4** verfügbares Freivolumen, das nicht mit einem jeweiligen Füllgut gefüllt ist, auszufüllen. Insbesondere ist es oftmals zu vermeiden, dass das Füllgut mit Sauerstoff in Kontakt kommt, woraufhin das Füllgut oxidieren würde. Das Schutzgas verhindert derartige Reaktionen und trägt mithin zu einer langen Haltbarkeit des Füllguts innerhalb des Behälters **4** bei. Die Schutzgasleitung ist typischerweise an eine Druckquelle angeschlossen, mittels derer das jeweilige Schutzgas unter einem Druck zur Verfügung gestellt wird. Auf diese Weise ist sichergestellt, dass im Zuge einer Entnahme des Füllguts aus dem Behälter **4** unmittelbar entsprechend Schutzgas in das freiwerdende Volumen in den Behälter **4** nachströmt.

In dem gezeigten Beispiel wirkt der Gasanschluss **9** mit einem Gasstutzen **17** zusammen, der hier dazu geeignet ist, mit einem Schnellverschluss **32** der Schutzgasleitung zusammenzuwirken. Auf diese Weise ist es besonders einfach möglich, die Schutzgasleitung werkzeuglos an den Gasanschluss **9** anzuschließen und eine strömungstechnische Verbindung mit dem Innenraum **8** des Behälters **4** herzustellen. Umgekehrt ist es ebenso einfach möglich, die Schutzgasleitung wieder von den Gasanschluss **9** zu entfernen.

Der Container **1** umfasst eine Sensoreinrichtung **10,** die ein Adapterelement **11** sowie ein Telemetriemodul **12** umfasst. Das Adapterelement **11** umfasst einen Mediumkanal **14** sowie einen Gasstutzen **13.** Weiterhin weist das Adapterelement **11** einen Anschlussabschnitt **44** auf, der in komplementärerer Weise zu dem Gasstutzen **17** des Gasanschlusses **9** des Behälters **4** ausgebildet ist. Auf diese Weise ist die Sensoreinrichtung **10** an dem Gasstutzen **17** fixierbar, wobei die Sensoreinrichtung **10** gewissermaßen auf den Gasstutzen **17** aufsteckbar bzw. aufgesteckt ist. Der Gasstutzen **17** verfügt hierbei über einen Dichtungsring **34,** mittels dessen das Adapterelement **11** gegen den Gasanschluss 9 abdichtbar ist. Die Mechanik zwischen Anschlussabschnitt **44** und Gasstutzen **17** ist prinzipiell identisch zu derjenigen, mittels derer eine Schutzgasleitung an den Gasstutzen **17** anschließbar ist. Auf diese Weise ist es besonders einfach möglich, die Sensoreinrichtung **10** an den Container **1** zu fixieren, wobei die Sensoreinrichtung **10** mittels ihres Adapterelements **11** lediglich werkzeuglos sowie zerstörungsfrei lösbar auf den Gasstutzen **17** aufgesteckt wird und dort einrastet.

An einem dem Deckel **19** des Containers **1** abgewandten Ende weist das Adapterelement **11** den Gasstutzen **13** auf, der in dem gezeigten Beispiel mit einem Schnellverschluss **32** zusammenwirkt. Der Schnellverschluss **32** ist mittels eines Dichtungsrings **33** gegen den Gasstutzen **13** des Adapterelements **11** abgedichtet. Der Gasstutzen **13** ist hier in besonders vorteilhafter Weise kompatibel zu den Gasstutzen **17** des Behälters **4** ausgebildet. Insbesondere gibt der Gasstutzen **13** des Adapterelements **11** den Gasstutzen **17** des Gasanschlusses **9** zumindest im Wesentlichen, vorzugsweise vollständig, identisch wieder. Auf diese Weise ist sichergestellt, dass eine jeweilige Schutzgasleitung ohne jegliche Notwendigkeit einer Anpassung oder Veränderung anstelle an den Gasstutzen **17** des Gasanschlusses **9** unmittelbar an den Gasstutzen **13** des Adapterelements **11** angeschlossen werden kann. Auf diese Weise ist der Container **1** ohne jegliche Umstellung weiter verwendbar, obwohl der eigentliche Gasanschluss **9** des Containers **1** nunmehr zur Fixierung der Sensoreinrichtung **10** an dem Container **1** genutzt wird. Der Gasstutzen **13** des Adapterelements **11** wirkt strömungstechnisch mit dessen Mediumkanal **14** zusammen, sodass nach Anschluss einer Schutzgasleitung an den Gasstutzen **13** (hier unter Verwendung des Schnellverschlusses **32**) das jeweilige Schutzgas unmittelbar durch den Mediumkanal **14** hindurch zu dem Gasanschluss **9** des Behälters **4** und schließlich in den Innenraum **8** des Behälters **4** strömen kann.

Das Telemetriemodul **12** der Sensoreinrichtung **10** umfasst in dem gezeigten Beispiel eine Mehrzahl von Sensoren **15** sowie einen Sender **16.** Insbesondere weist das Telemetriemodul **12** einen Geopositionssensor **41,** einen Beschleunigungssensor **25,** einen Temperatursensor **28,** einen Datenlogger **26** sowie eine Auswerteinheit **27** auf. Diese Bauteile des Telemetriemoduls **12** sind gemeinsam in einem Gehäuse **29** untergebracht, das einen Schutz besagter Bauteile vor äußeren Einwirkungen, insbesondere Feuchtigkeit und Schmutz, bereitstellt. Die Sensoren **15** sind dazu geeignet, Daten betreffend mindestens einen Zustandsparameter des Containers **1** und/oder einen Zustandsparameter des in dem Container **1** gelagerten Füllguts zu erfassen. Besagte Daten sind - ggf. nach Zwischenspeicherung in dem Datenlogger **26** sowie gegebenenfalls einer Verarbeitung mittels der Auswerteinheit **27** - mittels des Senders **16** versendbar, sodass besagte Daten aus der Ferne kabellos abgerufen werden können. Beispielsweise ist es denkbar, eine Absolutposition des Containers **1** mittels des Geopositionssensors **41** zu erfassen und mittels des Senders **16** zu versenden. Auf diese Weise ist es beispielsweise möglich, dass ein Kunde, der ein jeweiliges Füllgut erworben hat, einen Standort des Containers **1** überwachen kann und auf diese Weise abschätzen kann, zu welchem Zeitpunkt der Container **1** in seinem Betrieb zu erwarten ist. In derselben Weise ist es denkbar, eine Temperatur des Füllguts dauerhaft zu überwachen, wodurch eine Qualitätssicherung vereinfacht wird. Mittels des Datenloggers **26** sind die erfassten Daten speicherbar, sodass zudem nicht nur jeweils aktuelle Datensätze abgerufen werden können, sondern insbesondere auch eine Historie auswertbar ist. Mittels des mindestens einen Beschleunigungssensors **25** sind ferner Beschleunigungszustände des Containers **1** erfassbar, wobei bei starken Ausschlägen beispielsweise auf einen Unfall geschlossen werden kann.

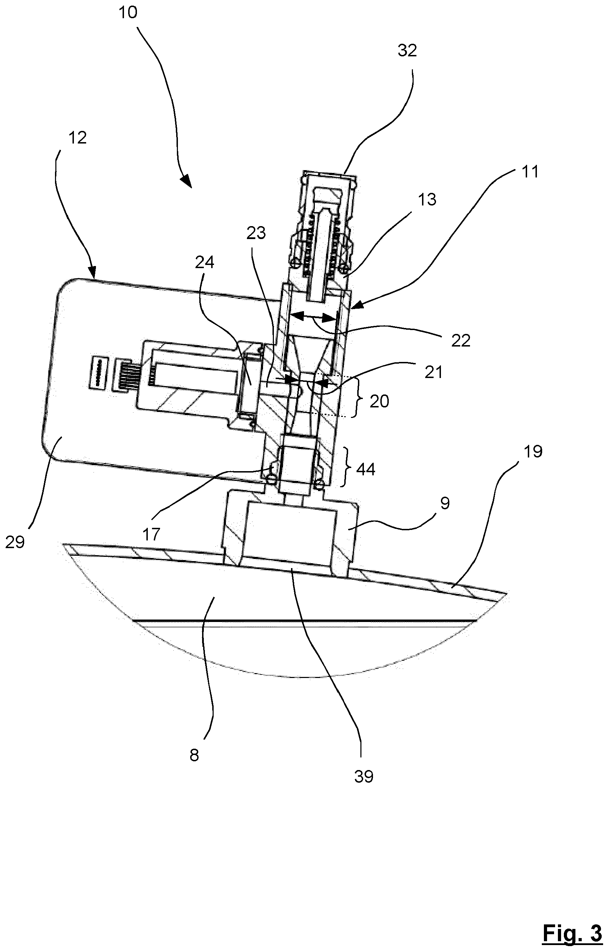

In dem gezeigten Ausführungsbeispiel gemäß **Figur 3** umfasst der Mediumkanal **14** des Adapterelements **11** eine Engstelle **20,** in deren Bereich ein Querschnitt **21** des Mediumkanals **14** gegenüber einem Querschnitt **22** außerhalb der Engstelle **20** reduziert ist. Insbesondere ist die Engstelle **20** derart ausgebildet, dass sich der Mediumkanal **14** beidseits der Engstelle **20** erweitert. Auf diese Weise ist der Mediumkanal **14** im Bereich der Engstelle **20** in Form einer Venturi-Düse ausgebildet. Die Reduktion des Querschnitts des Mediumkanals **14** führt dazu, dass das durch den Mediumkanal **14** strömende Schutzgas im Bereich der Engstelle **20** beschleunigt wird. Demzufolge ist eine Strömungsgeschwindigkeit des Schutzgases **20** im Bereich der Engstelle **20** größer als in einem Bereich außerhalb der Engstelle **20.** Dies führt dazu, dass ein dynamischer Druck des Schutzgases im Bereich der Engstelle **20** ansteigt, wodurch umgekehrt ein statischer Druck, der hydrostatisch auf eine Wandung des Mediumkanals **14** drückt, abnimmt.

Der Mediumkanal **14** wirkt weiterhin mit einer Stichleitung **23** zusammen, deren Längsachse senkrecht zu einer Längsachse des Mediumkanals **14** ausgerichtet ist. Mit anderen Worten trifft die Stichleitung **23** unter einem Winkel **48** auf den Mediumkanal **14** im Bereich der Engstelle **20,** der hier 90° beträgt. An einem der Mediumkanal **14** abgewandten Ende wirkt die Stichleitung **23** mit einem Drucksensor **24** zusammen. Dieser ist dazu geeignet, Daten betreffend einen statischen Druck innerhalb der Stichleitung **23** zu erfassen. Gemäß obiger Erläuterung ändert sich besagter statischer Druck, sobald Schutzgas durch den Mediumkanal **14** strömt. Eine derartige Strömung ist demzufolge mittels einer Veränderung des Drucks innerhalb der Stichleitung **23** feststellbar, wobei besagte Veränderung mittels des Drucksensors **24** erfasst wird. Auf diese Weise ist es möglich, mittels der Sensoreinrichtung **10** festzustellen, sobald Schutzgas durch das Adapterelement **11** strömt. Letzteres geschieht wiederum in aller Regel nur dann, wenn Füllgut aus dem Innenraum **8** des Behälters **4** entnommen wird, wobei hierdurch bedingt ein freiwerdendes Volumen innerhalb des Behälters **4** mit zusätzlichem Schutzgas aufgefüllt wird. Demzufolge ist es erfindungsgemäß beispielsweise denkbar, dass der Beginn einer Entnahme von Füllgut aus dem Behälter **4** in einer Druckverlaufskurve, die unter Verwendung von mittels des Drucksensors **24** erhobenen Daten erstellt wird, in Form eines Abfalls des Drucks erkennbar ist.

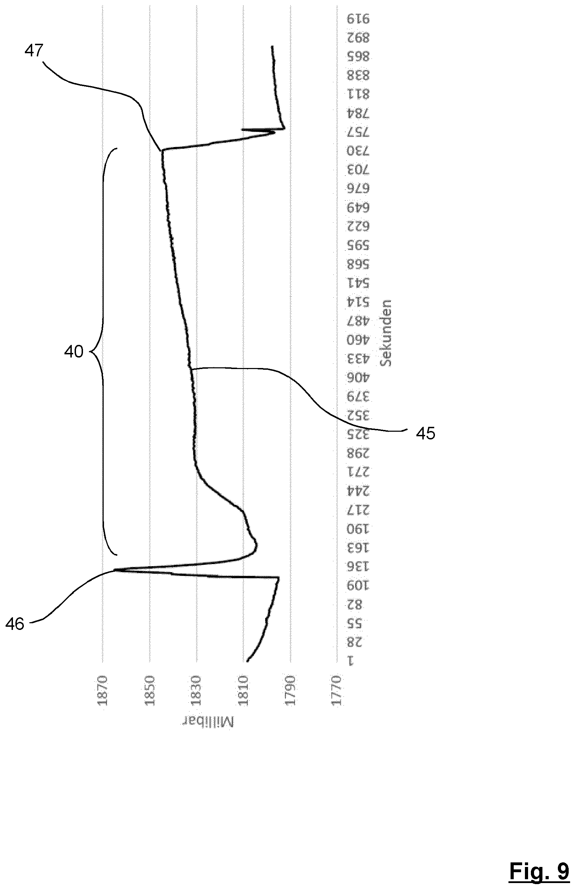

Dieses Phänomen ist beispielsweise anhand einer Druckverlaufskurve **45** erkennbar, die in **Figur 9** dargestellt ist. Hier ist insbesondere ein Peak **46** erkennbar, der zunächst einen Anschluss einer Schutzgasleitung an den Container **1** erkennen lässt, infolgedessen der statische Druck an dem Drucksensor **24** stark zunimmt. Dies ist dadurch bedingt, dass die Schutzgasleitung an eine Druckquelle angeschlossen ist, deren Druck einen Innendruck des Behälters **4** übersteigt. Mit Beginn der Entnahme des Füllguts aus dem Behälter **4** findet sodann eine gerichtete Strömung des Schutzgases durch den Mediumkanal **14** statt, woraufhin gemäß obiger Erläuterung der statische Druck an dem Drucksensor **24** schlagartig abnimmt. Der steile Abfall der Druckverlaufskurve **45** im Bereich des Peaks **46** lässt somit auf einen Beginn der Entnahme von Füllgut aus dem Behälter **4** schließen. Die Druckverlaufskurve **45** lässt weiterhin einen weiteren Hochpunkt **47** erkennen, von dem aus die Druckverlaufskurve **45** stark abfällt. Diese Stelle lässt sich interpretieren als der Zeitpunkt, zu dem der Behälter **4** vollständig geleert ist, das heißt sämtliches Füllgut aus dem Behälter **4** entnommen wurde. Eine Pumpe, mittels derer das Füllgut aus dem Behälter abgesaugt wird, zieht in diesem Moment unmittelbar das Schutzgas an, sodass der statische Druck innerhalb des Containers 1 sowie analog innerhalb des Mediumkanals **14** und der Stichleitung **23** schlagartig abnimmt. Besagter Hochpunkt **47** lässt sich demzufolge als Zeitpunkt interpretieren, zu dem der Behälter **4** vollständig geleert ist.

Die fortwährende Erfassung des Drucks mittels des Drucksensors **24** erlaubt erfindungsgemäß eine Analyse des Füllstandes des Behälters **4** mit Füllgut, indem zumindest ein Zeitraum **40** erfassbar ist, innerhalb dessen eine Entnahme von Füllgut aus dem Container **1** stattfindet. In dem in **Figur 9** gezeigten Beispiel findet die Entnahme derart statt, dass der Behälter **4** des Containers **1** schließlich vollständig geleert ist. Alternativ ist es ebenso denkbar, dass die Entnahme des Füllguts zumindest vorübergehend endet, bevor der Behälter **4** vollständig geleert ist. Ein Ende der Entnahme würde in der Druckverlaufskurve **45** anhand einer schlagartigen Erhöhung des statischen Drucks erkennbar, da ohne Entnahme weiteren Füllguts aus dem Behälter **4** eine Strömung von Schutzgas durch den Mediumkanal **14** eingestellt würde und infolgedessen der dynamische Druck abnimmt, während der statische Druck zunimmt. Anhand der Druckverlaufskurve **45** lässt sich sodann schließlich feststellen, über welchen Zeitraum hinweg Füllgut aus dem Behälter **4** entnommen wurde. Hieraus lässt sich im Umkehrschluss eine Aussage darüber treffen, welcher Füllstand des Füllguts innerhalb des Behälters **4** noch vorhanden ist. Folglich ist es möglich, mittels einer Überwachung des Drucks mittels eines Drucksensors **24** der Sensoreinrichtung **10** einen Füllstand des Behälters **4** des Containers **1** zu überwachen.

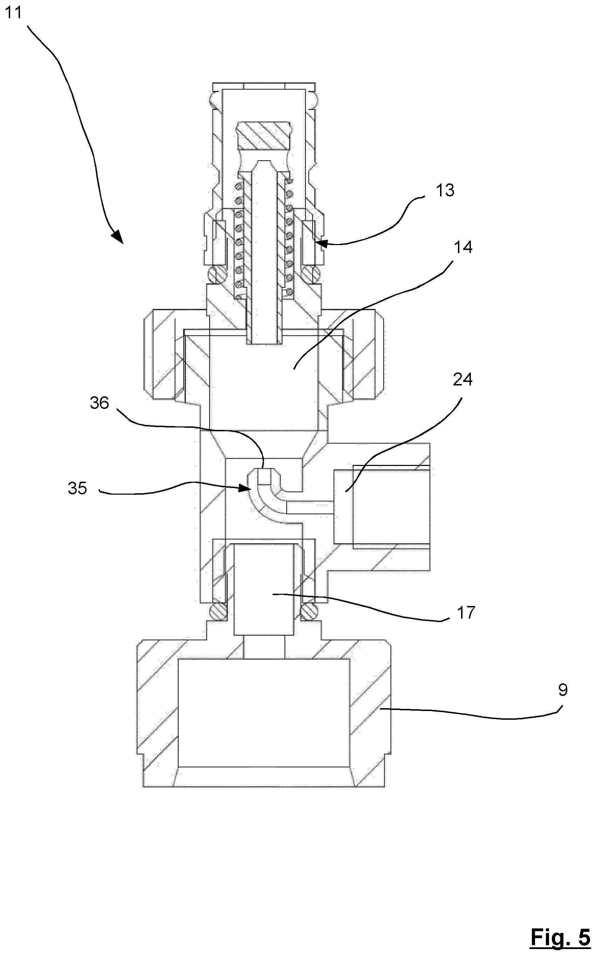

In einer alternativen Ausgestaltung des Adapterelements **11** wird eine Veränderung des Drucks innerhalb des Mediumkanals **14** nicht nach dem Venturi-Prinzip gemäß vorstehender Erläuterung erfasst, sondern mittels eines sogenannten Pitotrohrs **35.** Eine entsprechende Ausgestaltung ergibt sich anhand von **Figur 5****.** Besagtes Pitotrohr **35** verfügt über einen senkrecht zu einer Strömungsrichtung des Schutzgases ausgerichteten Öffnungsquerschnitt **36,** durch den hindurch strömendes Schutzgas in das Pitotrohr **35** eintreten kann und schließlich auf einen Drucksensor **24** leitbar ist. Mittels einer solchen Anordnung ist der dynamische Druck des Schutzgases innerhalb des Mediumkanals **14** bzw. eine Veränderung desselben erfassbar, sodass auch mit einer solchen Anordnung feststellbar ist, sobald eine Strömung von Schutzgas durch den Mediumkanal **14** einsetzt. Gemäß obiger Erläuterung ist das Auftreten einer solchen Strömung mit der Entnahme von Füllgut aus dem Behälter **4** assoziierbar, sodass anhand erfasster Daten des Drucksensors **24** Beginn und Ende einer Entnahme von Füllgut aus dem Container **1** erfassbar sind, wobei mittels Feststellung eines Zeitraums, über den hinweg die Entnahme stattgefunden hat, schließlich ein Rückschluss auf den Füllstand des Füllguts innerhalb des Behälters **4** gezogen werden kann.

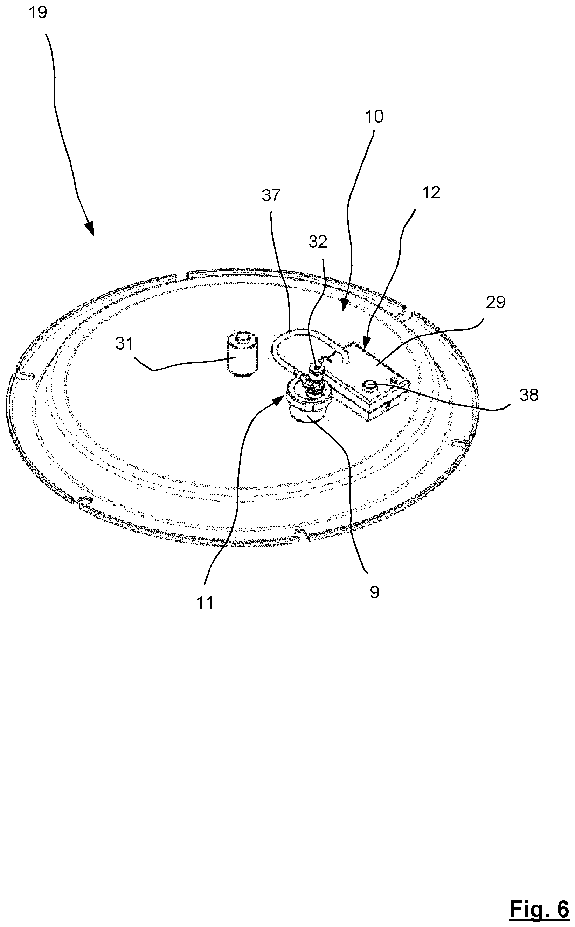

Eine alternative Ausführungsform einer Sensoreinrichtung **10,** die in den **Figuren 6 bis 8** dargestellt ist, umfasst ein Adapterelement **11,** das im Vergleich zu den Sensoreinrichtungen **10** gemäß den **Figuren 3 bis 5** deutlich kleiner ausgebildet ist. Besagte Sensoreinrichtung **10** ist mittels einer Überwurfmutter **39** an den Gasanschluss **9** des Behälters **4** angeschlossen. Der Gasanschluss **9** verfügt als solcher in dem gezeigten Beispiel über keinen eigenen Gasstutzen **17,** sodass ein Anschluss einer Schutzgasleitung an den Behälter **4** lediglich über den Gasstutzen **13** des Adapterelements **11** möglich ist. Der zugehörige Container **1** ist demzufolge derart ausgebildet, dass er auf die Anordnung der Sensoreinrichtung **10** an den Gasanschluss **9** angewiesen ist, um bestimmungsgemäß verwendet zu werden. Im Unterschied zu den vorstehend beschriebenen Sensoreinrichtungen **10** ist bei der alternativen Variante der Mediumkanal **14** zumindest im Wesentlichen horizontal orientiert, wodurch das erforderliche Bauraumvolumen des Adapterelements **11** deutlich reduziert wird. Vergleichbar zu der vorstehend beschriebenen Konstruktion verfügt auch die Sensoreinrichtung **10** gemäß der **Figuren 6 bis 8** in deren Mediumkanal **14** über eine Engstelle **20,** in der der Querschnitt **21** des Mediumkanals **14** gegenüber dessen Querschnitt **22** außerhalb der Engstelle **20** reduziert ist. Auch verfügt die Sensoreinrichtung **10** über eine Stichleitung **23,** die unter Ausbildung eines Winkels **48** im Bereich der Engstelle **20** an den Mediumkanal **14** angeschlossen ist, wobei der Winkel **48** hier von einem rechten Winkel gebildet ist. Auf diese Weise ist analog zu obiger Erläuterung eine Veränderung des statischen Drucks innerhalb des Mediumkanals **14** erfassbar, wobei die Stichleitung **23** hier in Form eines gebogenen Rohres ausgebildet ist, an dessen Ende eine flexible Verbindungsleitung **37** dicht angeschlossen ist. Besagte Verbindungsleitung **37** wirkt an einem dem Adapterelement **11** abgewandten Ende mit einem Drucksensor **24** zusammen, der hier in dem zugehörigen Telemetriemodul **12** untergebracht ist.

Letzteres verfügt hier über ein quaderförmiges Gehäuse **29,** das grundsätzlich unabhängig von dem Adapterelement **11** in Kraft übertragender Weise mit dem Deckel **19** des Containers **1** verbunden ist, insbesondere mittels einer Verschraubung. Das Telemetriemodul **12** verfügt hier über eine LED **38,** mittels derer ein Betriebszustand des Telemetriemoduls **12** bzw. der darin befindlichen Sensoren **15** optisch anzeigbar ist.

### Bezugszeichenliste

- 1: Container
- 2: Gestell
- 3: Untergrund
- 4: Behälter
- 5: Abstand
- 6: Unterseite
- 7: Öffnung
- 8: Innenraum
- 9: Gasanschluss
- 10: Sensoreinrichtung
- 11: Adapterelement
- 12: Telemetriemodul
- 13: Gasstutzen
- 14: Mediumkanal
- 15: Sensor
- 16: Sender
- 17: Gasstutzen
- 18: Oberseite
- 19: Deckel
- 20: Engstelle
- 21: Querschnitt
- 22: Querschnitt
- 23: Stichleitung
- 24: Drucksensor
- 25: Beschleunigungssensor
- 26: Datenlogger
- 27: Auswerteinheit
- 28: Temperatursensor
- 29: Gehäuse
- 30: Anschlussrohr
- 31: Überdruckventil
- 32: Schnellverschluss
- 33: Dichtungsring
- 34: Dichtungsring
- 35: Pitotrohr
- 36: Öffnungsquerschnitt
- 37: Verbindungsleitung
- 38: LED
- 39: Öffnung
- 40: Zeitraum
- 41: Geopositionssensor
- 42: Bein
- 43: tiefste Stelle
- 44: Anschlussabschnitt
- 45: Druckverlaufskurve
- 46: Peak
- 47: Hochpunkt
- 48: Winkel

## Patentansprüche

1. Verfahren zum Betrieb eines Containers (1) für fließfähiges Füllgut,
der Container (1) umfassend ein Gestell (2) und einen Behälter (4), wobei der Behälter (4) mittels des Gestells (2) in einem Abstand (5) von einem Untergrund (3) lagerbar ist, sodass eine Unterseite (6) des Behälters (4) zugänglich ist, wobei der Behälter (4) an seiner Unterseite (4) mindestens eine Öffnung (7) aufweist, mittels derer Füllgut in einen Innenraum (8) des Behälters (4) leitbar oder aus dem Innenraum (8) entnehmbar ist, wobei der Behälter (4) mindestens einen Gasanschluss (9) aufweist, mittels dessen eine Schutzgasleitung an den Behälter (4) anschließbar ist,
umfassend die folgenden Verfahrensschritte:
a) Vor einer Entnahme von Füllgut aus dem Behälter (4) wird eine Schutzgasleitung an den Gasanschluss (9) angeschlossen und mit Druck beaufschlagt, sodass Schutzgas durch einen Mediumkanal (14) hindurch in den Innenraum (8) des Behälters (4) einströmen kann,
b) Eine Entnahmevorrichtung wird an die Öffnung (7) des Behälters (4) angeschlossen, wobei mittels der Entnahmevorrichtung in dem Behälter (4) vorhandenes Füllgut durch die Öffnung (7) hindurch aus dem Innenraum (8) entnommen wird,
c) zumindest während eines Zeitraums (40) der Entnahme des Füllguts aus dem Behälter (4) werden mittels eines Drucksensors (24) Daten betreffend einen Druck des Schutzgases in dem Mediumkanal (14) erfasst,
**gekennzeichnet durch** die folgenden Verfahrensschritte:
d) anhand der erfassten Daten werden Zeitpunkte bestimmt, zu denen die Entnahme des Füllguts beginnt und endet, wobei die Differenz der Zeitpunkte einen Zeitraum der Entnahme ergibt,
e) anhand des ermittelten Zeitraums wird bei bekanntem Massestrom der Entnahme des Füllgutes eine aus dem Behälter (4) entnommene Menge des Füllguts und dessen verbleibender Füllstand in Bezug auf einen Ausgangsfüllstand zu Beginn der Entnahme ermittelt.

2. Verfahren nach Anspruch 1, **dadurch gekennzeichnet, dass** die mittels des Drucksensors (24) erfassten Daten einen statischen Druck und/oder einen dynamischen Druck des Schutzgases innerhalb des Mediumkanals (14) betreffen.

3. Verfahren nach Anspruch 1 oder 2, **dadurch gekennzeichnet, dass** eine Strömung des Schutzgases in dem Mediumkanal (14) beschleunigt wird, sodass ein dynamischer Druck des Schutzgases zumindest bereichsweise ansteigt.

4. Verfahren nach Anspruch 3, **dadurch gekennzeichnet, dass** die Strömung des Schutzgases mittels einer in dem Mediumkanal (14) angeordneten Engstelle (20) beschleunigt wird.

5. Verfahren nach einem der Ansprüche 1 bis 4, **dadurch gekennzeichnet, dass** mittels des Drucksensors (24) erfasste Daten mittels eines Datenloggers (26) zumindest zeitweise gespeichert werden.

6. Verfahren nach einem der Ansprüche 1 bis 5, **dadurch gekennzeichnet, dass** mittels des Drucksensors (24) erfasste Daten mittels einer Auswerteinheit (27) verarbeitet werden.

7. Verfahren nach einem der Ansprüche 1 bis 6, **dadurch gekennzeichnet, dass** Daten mittels eines Senders (16) kabellos versendet werden.

8. Verfahren nach einem der Ansprüche 1 bis 7, **dadurch gekennzeichnet, dass** in Abhängigkeit der Druckverhältnisse ermittelt wird, wie groß der Volumenstrom des in den Behälter (3) nachströmenden Schutzgases und demzufolge auch der Massenstrom des aus dem Behälter (3) entnommenen Füllguts sind.

## Claims

1. Method for operating a container (1) for flowable filling material, the container (1) comprising a frame (2) and a tank (4), wherein the tank (4) can be supported by means of the frame (2) at a distance (5) from a base (3) so that an underside (6) of the tank (4) is accessible, wherein the tank (4) has at least one opening (7) by means of which filling material can be guided into an interior (8) of the tank (4) or can be removed from the interior (8), wherein the tank (4) has at least one gas connection (9) by means of which a protective gas line can be connected to the tank (4),
comprising the following process steps:
a) before removal of filling material from the tank (4) a protective gas line is connected to the gas connection (9) and pressure is applied so that protective gas can flow into the interior (8) of the tank (4) through a medium channel (14),
b) a removal apparatus is connected to the opening (7) of the tank (4), wherein the filling material present in the tank (4) can be removed from the interior (8) through the opening (7) by means of the removal apparatus,
c) at least during a time interval (40) of the removal of filling material from the tank (4), data relating to a pressure of the protective gas in the medium channel (14) is detected by means of a pressure sensor (24),
**characterized by** the following process steps:
d) with the aid of the detected data time points at which the removal of the filling material begins and ends are determined, wherein the difference of the time points gives a removal time interval,
e) with the aid of the determined time interval, if the mass flow of the removal of filling material is known, a quantity of filling material removed from the container (4) and its remaining level in relation to an initial level at the beginning of removal are determined.

2. Method according to Claim 1, **characterized in that** the data detected by means of the pressure sensor (24) relates to a static pressure and/or a dynamic pressure of the protective gas within the medium channel (14).

3. Method according to Claim 1 or 2, **characterized in that** a flow of the protective gas in the medium channel (14) is accelerated so that a dynamic pressure of the protective gas increases at least in some regions.

4. Method according to Claim 3, **characterized in that** the flow of the protective gas is accelerated by means of a constriction (20) arranged in the medium channel (14) .

5. Method according to one of Claims 1 to 4, **characterized in that** data detected by means of the pressure sensor (24) is stored at least temporarily by means of a data logger (26).

6. Method according to one of Claims 1 to 5, **characterized in that** data detected by means of the pressure sensor (24) is processed by means of an evaluation unit (27).

7. Method according to one of Claims 1 to 6, **characterized in that** data can be transmitted in a wireless manner by means of a transmitter (16).

8. Method according to one of Claims 1 to 7, **characterized in that** the magnitude of the volume flow of the protective gas flowing subsequently into the container (3) and consequently also the mass flow of the filling material removed from the container (3) are determined depending on the pressure ratios.

## Revendications

1. Procédé opératoire d'un conteneur (1) destiné à de la matière coulante contenue,
le conteneur (1) comprenant un châssis (2) et un réservoir (4), le réservoir (4) étant susceptible d'être stocké au moyen du châssis (2) avec un écart (5) par rapport à un support (3), de sorte qu'une face inférieure (6) du réservoir (4) soit accessible, le réservoir (4) comportant sur sa face inférieure (4) au moins une ouverture (7), au moyen de laquelle de la matière contenue peut être dirigée dans un espace intérieur (8) du réservoir (4) ou être prélevée hors de l'espace intérieur (8), le réservoir (4) comportant au moins un raccordement de gaz (9) au moyen duquel un conduit de gaz protecteur peut se raccorder sur le réservoir (4), comprenant les étapes de procédé suivantes, consistant à :
a) avant un prélèvement de matière contenue hors du réservoir (4), raccorder un conduit de gaz protecteur sur le raccordement de gaz (9) et le soumettre à une pression, de telle sorte que du gaz protecteur puisse affluer à travers une canalisation de fluide (14) dans l'espace intérieur (8) du réservoir (4),
b) raccorder un dispositif de prélèvement sur l'ouverture (7) du réservoir (4), au moyen du dispositif de prélèvement, de la matière contenue présente dans le réservoir (4) étant prélevée à travers l'ouverture (7) dans l'espace intérieur (8),
c) au moins pendant une période (40) de prélèvement de la matière contenue dans le réservoir (4), au moyen d'un capteur de pression (24), détecter des données concernant une pression du gaz protecteur dans la canalisation de fluide (14),
**caractérisé par** les étapes de procédé suivantes consistant à :
d) à l'aide des données détectées, déterminer des moments auxquels le prélèvement de la matière contenue commence et se termine, de la différence entre les moments résultant une période de prélèvement,
e) à l'aide de la période prédéfinie, alors que le débit massique du prélèvement de la matière contenue est connu, déterminer une quantité de produit contenu prélevée dans le réservoir (4) et le niveau de remplissage résiduel de celui-ci en rapport à un niveau de remplissage initial au début du prélèvement.

2. Procédé selon la revendication 1, **caractérisé en ce que** les données détectées au moyen du capteur de pression (24) concernent une pression statique et / ou une pression dynamique du gaz protecteur à l'intérieur de la canalisation de fluide (14).

3. Procédé selon la revendication 1 ou 2, **caractérisé en ce qu'**un courant dans la canalisation de fluide (14) est accéléré, de telle sorte qu'une pression dynamique du gaz protecteur augmente au moins par endroits.

4. Procédé selon la revendication 3, **caractérisé en ce que** le courant du gaz protecteur est accéléré au moyen d'un étranglement (20) placé dans la canalisation de fluide (14).

5. Procédé selon l'une quelconque des revendications 1 à 4, **caractérisé en ce que** des données détectées au moyen du capteur de pression (24) sont mémorisées au moins temporairement au moyen d'un enregistreur de données (26).

6. Procédé selon l'une quelconque des revendications 1 à 5, **caractérisé en ce que** des données détectées au moyen du capteur de pression (24) sont traitées au moyen d'une unité d'évaluation (27).

7. Procédé selon l'une quelconque des revendications 1 à 6, **caractérisé en ce que** des données sont envoyées sans fil au moyen d'un émetteur (16).

8. Procédé selon l'une quelconque des revendications 1 à 7, **caractérisé en ce qu'**en fonction des rapports de pression, il est déterminé quelle est la valeur du débit volumétrique du gaz protecteur post-circulant dans le réservoir (3) et en conséquence également quel est le débit massique du produit contenu prélevé dans le réservoir (3).
